# EUROPÄISCHE PATENTSCHRIFT

(11) **EP 1 230 156 B1**
(45) Veröffentlichungstag und Bekanntmachung des Hinweises auf die Patenterteilung: **25.05.2011**
(21) Anmeldenummer: 00962299.4
(22) Anmeldetag: 08.08.2000
(51) Int. Cl.: C01B 37/00, C01B 39/00, B01J 29/04

(54) **VERFAHREN ZUR HERSTELLUNG EINES KRISTALLINEN, ZEOLITHISCHEN FESTSTOFFS**
METHOD FOR PRODUCING CRYSTALLINE, ZEOLITIC SOLID MATTER
PROCEDE POUR PRODUIRE UNE MATIERE SOLIDE ZEOLITHIQUE CRISTALLINE

(30) Priorität: 20.08.1999 DE 19939416
(43) Veröffentlichungstag der Anmeldung: 14.08.2002
(60) Teilanmeldung: 10181285.7
(73) Patentinhaber: BASF SE, 67056 Ludwigshafen (DE)
(72) Erfinder: MÜLLER, Ulrich, 67435 Neustadt (DE); HILL, Friedrich, 67149 Meckenheim (DE); RIEBER, Norbert, 68259 Mannheim (DE)
(86) Internationale Anmeldenummer: PCT/EP2000/007704
(87) Internationale Veröffentlichungsnummer: WO 2001/014251

(56) Entgegenhaltungen:
- EP-A- 0 893 158
- US-A- 3 838 192
- US-A- 5 558 851
- PATENT ABSTRACTS OF JAPAN vol. 016, no. 172 (C-0933), 24. April 1992 (1992-04-24) & JP 04 016509 A (TOKUYAMA SODA CO LTD), 21. Januar 1992 (1992-01-21)

## Beschreibung

Die vorliegende Erfindung betrifft ein verbessertes Verfahren zur Herstellung eines kristallinen Feststoffs, umfassend mindestens ein zeolithisches Material, wobei der Reaktionsaustrag der Kristallisation direkt und ohne Abtrennung irgendwelcher Bestandteile einer kontinuierlich durchgeführten Trocknung zugeführt wird

Zeolithe sind bekanntermaßen kristalline Alumosilikate mit geordneten Kanal- und Käfigstrukturen, deren Porenöffnungen im Bereich von Mikroporen kleiner 0,9 nm liegen. Das Netzwerk solcher Zeolithe ist aufgebaut aus SiO₄⁻ und AlO₄⁻-Tetraedern, die über gemeinsame Sauerstoffbrücken verbunden sind. Eine Übersicht der bekannten Strukturen findet sich beispielsweise bei M. W. Meier, D. H. Olson, Ch. Baerlocher "Atlas of Zeolite Structure Types", 4. Auflage, Elsevier, London 1996, S. 9 bis 229.

Zum Ausgleich der negativen Elektrovalenz, die durch den Einbau von Al(III)- in das Si(IV)-Silikatgitter entsteht, findet man bei Zeolithen austauschfähige Kationen; insbesondere kann es sich dabei je nach Herstellverfahren um Kationen des Natriums, Kaliums, Lithiums oder Cäsiums handeln. Ersetzt man diese Kationen gegen Protonen, beispielsweise durch einen Ionenaustausch, so erhält man die entsprechend aziden Festkörper mit Zeolithstruktur, die sogenannte H-Form.

Es sind nun auch Zeolithe bekannt, die kein Aluminium enthalten und bei denen im Silikatgitter an Stelle des Si(IV) teilweise Titan als Ti(IV) steht. Diese Titanzeolithe, insbesondere solche mit einer Kristallstruktur vom MFI-Typ, sowie Möglichkeiten zu Ihrer Herstellung sind beschrieben, beispielsweise in der EP-A 0 311 983 oder EP-A 405 978. Außer Silicium und Titan können solche Materialien auch zusätzliche Elemente wie z. B. Aluminium, Zirkonium, Zinn, Eisen, Kobalt, Nickel, Gallium, Bor oder geringe Menge an Fluor enthalten. In den im erfindungsgemäßen Verfahren verwendeten Zeolith-Katalysatoren kann das Titan des Zeoliths teilweise oder vollständig durch Vanadium, Zirkonium, Chrom oder Niob oder ein Gemisch aus zwei oder mehr davon ersetzt sein. Das molare Verhältnis von Titan und/oder Vanadium, Zirkonium, Chrom oder Niob zur Summe aus Silicium und Titan und/oder Vanadium und/oder Zirkonium, und/oder Chrom und/oder Niob liegt in der Regel im Bereich von 0,01 : 1 bis 0,1 : 1.

Titanzeolithe sind dafür bekannt, daß sie über ein bestimmtes Muster bei der Bestimmung der Röntgenbeugungsaufnahmen, sowie zusätzlich über eine Gerüstschwingungsbande im Infrarot-Bereich bei etwa 960 cm⁻¹ identifiziert werden können und sich damit von Alkalititanaten oder kristallinen oder amorphen TiO₂-Phasen unterscheiden.

Von Titanzeolithen mit MFI-Struktur ist bekannt, daß sie sich als Katalysatoren für Oxidationsreaktionen eignen. So ist beispielsweise aus EP-A 0 100 118 und EP-A 0 100 119 ein Verfahren bekannt, wonach Propen in wäßriger Phase mit Wasserstoffperoxid an Titanzeolithen zu Propylenoxid epoxidiert werden kann. Die Herstellung von Cyclohexanonoxim aus Cyclohexanon durch Umsetzung mit Ammoniak und Wasserstoffperoxid wird in der EP-A 0 208 311 beschrieben. Weitere Reaktionen unter Verwendung derartiger Katalysatoren, wie die Hydroxylierung von Aromaten und die Oxidation gesättigter C₂- bis C₁₈-Kohlenwasserstoffe mit H₂O₂ sind aus der GB-A 2 116 974 bzw. der EP-A 0 376 453 bekannt.

Typischerweise stellt man die vorgenannten Titanzeolithe dadurch her, daß man ein wäßriges Gemisch aus einer SiO₂-Quelle, einem Titanoxid und einer stickstoffhaltigen organischen Base, wie z.B. Tetrapropylammoniumhydroxid, gegebenenfalls noch in Gegenwart von Alkalilauge in einem Druckbehälter unter erhöhter Temperatur mehrere Stunden oder wenige Tage lang umsetzt, wobei ein kristallines Produkt erhalten wird. Dieses wird in der Regel abfiltriert, gewaschen, getrocknet und zur Entfernung der stickstoffhaltigen organischen Base bei erhöhter Temperatur calciniert. In dem so erhaltenen Pulver liegt das Titan zumindest teilweise innerhalb des Zeolithgerüsts in wechselnden Anteilen mit vier-, fünf- oder sechsfacher Koordination vor (Behrens et al., J. Chem. Soc., Chem. Commun. 1991, S. 678 - 680). Zur Verbesserung des katalytischen Verhaltens kann sich daran noch eine mehrmalige Waschbehandlung mit schwefelsaurer Wasserstoffperoxidlösung anschließen, wonach anschließend das Titanzeolith-Pulver erneut getrocknet und gebrannt werden muß, wie es etwa in der EP-A 0 276 362 beschrieben wird. Der so erhaltene pulverförmige Titanzeolith muß nun abschließend unter Zusatz von geeigneten Bindemitteln in einem Formgebungsschritt verarbeitet werden, um ihn als Katalysator in einer handhabbaren Form verfügbar zu machen. Eine Methode hierzu wird in der EP-A 0 200 260 beschrieben.

Die oben beschriebene Kristallisation des Titanzeolithen aus geeigneten Ausgangsstoffen durch hydrothermale Umsetzung wird im allgemeinen bei Temperaturen von 50 bis 250 °C über einen ausreichend langen Zeitraum durchgeführt, wobei sich temperaturbedingt ein autogener Druck einstellt.

Nach der Kristallisation stellt sich das Problem, den erwünschten kristallinen Feststoff, mit Partikelgrößen von in der Regel deutlich kleiner 1 µm, aus der stark alkalischen, noch organisches Templat enthaltenden Mutterlauge abtrennen zu müssen. Die EP-A 0 893 158 beschreibt dazu in den Ausführungsbeispielen entweder die Abtrennung durch herkömmliches Zentrifugieren und anschließendes Waschen des Feststoffs oder aber den Zusatz von Flockungshilfsmitteln mit einer anschließenden Zentrifugation. Die anschließende Trocknung wird gemäß dieser Druckschrift durch Sprühtrocknung oder Wirbelschicht-Sprühgranulationstrocknung durchgeführt. Sowohl die Abtrennung des Zeoliths aus der bei der Kristallisation erhaltenen Suspension als auch der Zusatz von Flockungshilfsmitteln stellt eine zusätzliche Verfahrensstufe dar, die zeitaufwendig und kostenintensiv ist.

Die EP-A 0 893 158 beschreibt Granulate, welche Titansilikalit-1 enthalten, sowie ein Verfahren zur Herstellung der Granulate. Unter anderem beschreibt das Dokument ein Herstellungsverfahren, in welchem nach dem eigentlichen Kristallisationsschritt das Kristallisat gegebenenfalls durch Filtration oder Zentrifugation weiter aufgearbeitet und dann dem Trocknungsschritt unterworfen wird.

Die US 5 558 851 A offenbart ein Verfahren zur Herstellung von kristallinem Zeolith. Im Rahmen dieses Verfahrens liegt am Ende des Kristallisationsschritts keine flüssige sondern eine pastöse Masse vor, welche vor dem Trocknungsschritt extrudiert werden kann. Dabei ist es möglich, dem Produkt ein Bindemittel zuzugeben und anschließend auf herkömmliche Weise zu extrudieren oder sprühzutrocknen.

Der vorliegenden Erfindung lag nunmehr die Aufgabe zugrunde, ein Verfahren zur Herstellung eines kristallinen, mindestens ein zeolithisches Material umfassenden Feststoffes bereitzustellen, das die zuvor genannten Nachteile nicht aufweist und insbesondere ohne zusätzliche Zwischenschritte zwischen Kristallisation und Trocknung auskommt.

Die EP-A 0 893 158 beschreibt Granulate, welche Titansilikalit-1 enthalten, sowie ein Verfahren zur Herstellung der Granulate. Unter anderem beschreibt das Dokument ein Herstellungsverfahren, in welchem nach dem eigentlichen Kristallisationsschritt das Kristallisat gegebenenfalls durch Filtration oder Zentrifugation weiter aufgearbeitet und dann dem Trocknungsschritt unterworfen wird.

Die US 5 558 851 A offenbart ein Verfahren zur Herstellung von kristallinem Zeolith. Im Rahmen dieses Verfahrens liegt am Ende des Kristallisationsschritts keine flüssige sondern eine pastöse Masse vor, welche vor dem Trocknungsschritt extrudiert werden kann. Dabei ist es möglich, dem Produkt ein Bindemittel zuzugeben und anschließend auf herkömmliche Weise zu extrudieren oder sprühzutrocknen.
wobei die Trocknung in einer Atmosphäre umfassend Sauerstoff, und mindestens ein Inertgas, durchgeführt wird, wobei der Sauerstoffgehalt der Atmosphäre weniger als 10 Vol.- % beträgt. wird. Die Trocknung wird in einer Atmosphäre durchgeführt, die Sauerstoff und mindestens ein Inertgas umfaßt. Vorzugsweise wird diese Atmosphäre als Trägergasstrom im Kreis gefahren. Als Inertgas können alle üblichen Inertgase, wie z.B. Stickstoff, Kohlenmonoxid, Kohlendioxid, Helium sowie Argon oder Gemische aus zwei oder mehr davon, verwendet werden. Der Sauerstoffgehalt der Atmosphäre beträgt weniger als 10 Vol.-%, bevorzugt weniger als 5 Vol.-%. Ferner kann als Inertgas ein Rauchgasgemisch mit einem COₓ-Gehalt, der sicherstellt, daß es keine Explosionsprobleme gibt, verwendet werden, wobei ein derartiges Rauchgasgemisch durch Erdgas-Verbrennung zur Rauchgas-Erzeugung gewonnen werden kann und dabei gleichzeitig Energie für die energieintensiven Stufen des Verfahrens gewonnen werden kann.

Dabei ist es im Rahmen der erfindungsgemäßen Trocknung essentiell, daß die Atmosphäre, insbesondere hinsichtlich des Sauerstoffgehaltes, so eingestellt wird, daß sicher außerhalb der Explosionsgrenzen gearbeitet wird.

Sofern die eingangs beschriebene Kristallisation in Gegenwart einer Templatverbindung durchgeführt wird, kann diese auf der im kristallinen Feststoff als Trockengut gegebenenfalls noch anhaftende Templatverbindung in einem nachgeschalteten Schritt mittels einer vorzugsweise wäßrigen Waschlösung abgelöst und in den Kristallisationsschritt zurückgeführt werden. Der Hauptteil des Templats wird jedoch bereits im Rahmen der Trocknung des Reaktionsaustrags entfernt, wobei die sich dann im Trägergasstrom befindlichen kondensierbaren Templatverbindungen auskondensiert werden.

Somit betrifft die vorliegende Erfindung auch ein integriertes Verfahren zur Herstellung eines kristallinen Feststoffes, umfassend mindestens ein zeolithisches Material, in dem
(i) der Feststoff aus mindestens einer Vorläuferverbindung in Anwesenheit mindestens einer Templatverbindung kontinuierlich kristallisiert wird, Sofern die eingangs beschriebene Kristallisation in Gegenwart einer Templatverbindung durchgeführt wird, kann diese auf der im kristallinen Feststoff als Trockengut gegebenenfalls noch anhaftende Templatverbindung in einem nachgeschalteten Schritt mittels einer vorzugsweise wäßrigen Waschlösung abgelöst und in den Kristallisationsschritt zurückgeführt werden. Der Hauptteil des Templats wird jedoch bereits im Rahmen der Trocknung des Reaktionsaustrags entfernt, wobei die sich dann im Trägergasstrom befindlichen kondensierbaren Templatverbindungen auskondensiert werden.

Somit betrifft die vorliegende Erfindung auch ein integriertes Verfahren zur Herstellung eines kristallinen Feststoffes, umfassend mindestens ein zeolithisches Material, in dem
(i) der Feststoff aus mindestens einer Vorläuferverbindung in Anwesenheit mindestens einer Templatverbindung kontinuierlich kristallisiert wird,
(ii) der Reaktionsaustrag aus der Kristallisation kontinuierlich sprühgetrocknet wird, wobei vor der Trocknung kein Bestandteil des Reaktionsaustrages der Kristallisation abgetrennt wird,
(iii) die Trocknung in einer Atmosphäre, umfassend Sauerstoff, (weniger als 10 Vol.-% Sauerstoff), und mindestens ein Inertgas, durchgerührt wird, wobei diese Atmosphäre als Trägergasstrom in Kreisfahrweise geführt wird,
(iv) aus dem Trägergasstrom nach Kontakt des Stromes mit dem zu trocknenden Reaktionsaustrag kondensierbare Templatverbindungen auskondensiert werden und in (i) rückgeführt werden,
(v) der sprühgetrocknete kristalline Feststoff aus (ii) einem kontinuierlichen Waschprozeß unterworfen wird, in dem Templatverbindungen, die von dem kristallinen Feststoff umfaßt werden, abgetrennt und in (i) rückgeführt werden, und
(vi) der aus (v) erhaltene kristalline Feststoff calciniert wird, wobei die dabei durch Abbrand der restlichen Menge an Templatverbindungen freiwerdende Energie in (i) rückgeführt wird.

Zusätzlich können selbstverständlich dem Reaktionsaustrag vor dem Trocknen noch Zuschlagsstoffe zugesetzt werden, die der Bindung, d.h. der mechanischen Stabilität des Sprühguts oder der Dotierung des Sprühgutes mit katalytisch aktiven Komponenten dienen, wobei hier die Aufbringung von Metallen zur Verwendung des resultierenden Feststoffs als Oxidationskatalysator gemäß DE-A 44 25 672 erwähnt werden soll.

Bezüglich der nach dem erfindungsgemäßen Verfahren getrockneten bzw. hergestellten kristallinen Feststoffe, die mindestens ein zeolithisches Material umfassen, existieren keinerlei Beschränkungen. Dabei sind im einzelnen die folgenden Zeolithe zu nennen.

Vorzugsweise werden Ti-, Ge-, Te-, Ta-, V-, Cr-, Nb-, Zr-Zeolithe und insbesondere Ti-Zeolithe, eingesetzt.

Dabei sind im einzelnen Ti-, Ge-, Te-, Ta-, V-, Cr-, Nb- oder Zr-Zeolithe des Strukturtyps ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER. MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON sowie ITQ-4 oder einer Mischstruktur aus zwei oder mehr dieser Strukturen oder ein Gemisch aus zwei oder mehr dieser Zeolithe, wobei wiederum die mit MFI-Struktur, BEA-Struktur, MEL-Struktur, ITQ-4 bzw. MFI/MEL-Mischstruktur als besonders bevorzugt anzusehen sind. Zeolithe dieses Typs sind beispielsweise in der oben erwähnten Literaturstelle von W. M. Meier et al. beschrieben.

Als besonders bevorzugte Katalysatoren sind im einzelnen die Ti-enthaltenden Zeolith-Katalysatoren, die im allgemeinen als "TS-1", "TS-2", "TS-3", "ZSM-48" und "ZSM-12", jeweils mit Ti, TTM-1, Ti-RUT, Ti-MCM-35, titanhaltige Zeolithe des Typs "UTD-1", "CIT 5", "CIT-1" und "SSZ-24" sowie Ti-Zeolithe mit einer zu Zeolith-beta-isomorphen Gerüststruktur zu nennen.

Zum Beispiel werden Titanzeolithe eingesetzt, wie sie beispielsweise aus der US 3 329 481 bekannt sind. Bei derartigen Titanzeolithen wird ein Teil des ursprünglich im Silicatgitter vorhandenem Si(IV) durch Titan als Ti(IV) ersetzt.

Weitere Titanzeolithe, insbesondere solche mit einer Kristallstruktur MFI-Typ sowie Möglichkeiten zu ihrer Herstellung sind u.a. in der US 4 410 501, EP-A 0 311 983, US 4 666 692, DE-A 3 047 798 oder in der BE 1 001 038 beschrieben, deren diesbezüglicher Inhalt vollumfänglich in den Kontext der vorliegenden Anmeldung einbezogen wird. Weitere im Rahmen der vorliegenden Erfindung gut einsetzbare titanhaltige Zeolithe, die eine von der MFI-Struktur verschiedene Struktur aufweisen, sind beispielsweise in der EP-A 0 405 978 beschrieben. Außer Silicium und Titan können derartige Zeolithe auch zusätzliche Elemente wie Aluminium (beschrieben u.a. in der DE-A 31 41 283), Gallium (EP-A 0 266 825), Bor (US 4 666 692) oder geringe Mengen an Fluor (EP-A 0 292 363) enthalten. Bezüglich der dort beschriebenen Zeolithe wird auch der Inhalt der vorstehend beschriebenen Druckschriften vollumfänglich in den Kontext der vorliegenden Anmeldung einbezogen.

Weitere im Rahmen des Verfahrens der vorliegenden Erfindung verwendbare Zeolith-Katalysatoren sind u. a. in US-A 5 430 000 und WO 94/29408 beschrieben, deren Inhalt diesbezüglich unter Bezugnahme in die vorliegende Anmeldung einbezogen wird.

Als weitere titanhaltige Zeolithe sind solche mit der Struktur des Ferrierits oder β-Zeolith und des Mordenits zu nennen.

Ferner lassen sich im erfindungsgemäßen Verfahren folgende Zeolith-Katalysatoren verwenden:

Katalysatoren mit Zeolith-Struktur, wie sie in der DE-A 196 23 611.8 beschrieben sind, die hiermit bzgl. der darin beschriebenen Katalysatoren vollumfänglich in den Kontext der vorliegenden Anmeldung durch Bezugnahme aufgenommen wird.

Dabei handelt es sich um Oxidationskatalysatoren auf der Basis von Titan- oder Vanadiumsilikaten mit Zeolith-Struktur, wobei bzgl. der Zeolith-Struktur auf die vorstehend als bevorzugt angegebenen Strukturen verwiesen wird. Diese Katalysatoren sind dadurch gekennzeichnet, daß sie, wie in obiger Anmeldung detailliert beschrieben, durch verfestigende Formgebungsprozesse geformt werden.

Ferner können Oxidationskatalysatoren auf der Basis von Titan- oder Vanadiumsilikaten mit Zeolith-Struktur mit einem Gehalt von 0,01 bis 30 Gew.-% an einem oder mehreren Edelmetallen aus der Gruppe Ruthenium, Rhodium, Palladium, Osmium, Iridium, Platin, Rhenium, Gold und Silber, die ebenfalls dadurch gekennzeichnet sind, daß sie durch verfestigende Formgebungsprozesse geformt worden sind, verwendet werden. Derartige Katalysatoren sind in der DE-A 196 23 609.6 beschrieben, die hiermit bzgl. der darin beschriebenen Katalysatoren vollumfänglich in den Kontext der vorliegenden Anmeldung durch Bezugnahme aufgenommen wird.

Bezüglich der verfestigenden Formgebungsprozesse, der Bindemittel sowie der Hilfsmittel und der Struktur der Oxidationskatalysatoren wird auf die DE-A 196 23 611.8 Bezug genommen.

Der in der DE-A 196 23 609.6 beschriebene Oxidationskatalysator weist einen Gehalt von 0,01 bis 30 Gew.-%, insbesondere 0,05 bis 15 Gew.-%, vor allem 0,1 bis 8 Gew.-%, jeweils bezogen auf die Menge der Titan- oder Vanadium-Zeolithe, der genannten Edelmetallen auf. Hierbei wird Palladium besonders bevorzugt. Die Edelmetalle können auf den Katalysator in Form geeigneter Edelmetallkomponenten, beispielsweise in Form von wasserlöslichen Salzen, vor, während oder im Anschluß an den verfestigenden Formgebungsschritt aufgebracht werden.

Ferner können die folgenden Katalysatoren erfindungsgemäß verwendet werden:

Ein mindestens ein poröses oxidisches Material enthaltender Formkörper, der erhältlich ist durch ein Verfahren, das die folgenden Stufen umfaßt:
(I) Versetzen eines Gemischs enthaltend ein poröses oxidisches Material oder ein Gemisch aus zwei oder mehr davon mit einer Mischung enthaltend mindestens einen Alkohol und Wasser, und
(II) Kneten, Verformen, Trocknen und Calcinieren des gemäß Stufe (I) versetzten Gemischs.

Details bezüglich dieses Katalysators sind der DE-A 197 23 751.7 zu entnehmen, die hiermit durch Bezugnahme vollumfänglich in den Kontext der vorliegenden Anmeldung aufgenommen wird.

Ferner können erfindungsgemäß Siliciumdioxid enthaltende Feststoffe, herstellbar durch ein Verfahren, das die folgende Stufe (I) umfaßt:
(I) Inkontaktbringen mindestens eines Vorläufers von Siliciumdioxid mit mindestens einem Strukturbildner in einem flüssigen Medium, dadurch gekennzeichnet, daß der Strukturbildner ein Polyethylenimin oder ein Gemisch aus zwei oder mehr davon ist,
eingesetzt werden.

Details bezüglich dieses Feststoffs sind der DE-A 197 32 865.2, deren diesbezüglicher Kontext vollumfänglich in die vorliegende Anmeldung durch Bezugnahme aufgenommen wird, zu entnehmen.

Weitere gut einsetzbare Katalysatoren stellen Formkörper dar, die einen inerten Träger und darauf aufgebracht mindestens ein Silicat, vorzugsweise ein kristallines Silicat, umfassen, erhältlich durch Aufbringen eines Gemischs enthaltend mindestens ein Silicat und mindestens einen Metallsäureester oder ein Hydrolysat davon oder eine Kombination aus Metallsäureester und Hydrolysat davon auf den inerten Träger, wie sie in der DE-A 197 54 924.1 beschrieben sind, wobei der diesbezügliche Inhalt dieser Anmeldung ebenfalls durch Bezugnahme in die vorliegenden Anmeldung aufgenommen wird.

Ferner können erfindungsgemäß Formkörper, umfassend mindestens ein Silicat und mindestens ein Metalloxid, herstellbar durch ein Verfahren, das die folgende Stufe (i) umfaßt:
(i) Vermischen des mindestens einen Silicats mit mindestens einem Metalloxidsol, das einen niedrigen Gehalt an Alkali- und Erdalkalimetallionen aufweist,
wie sie in der DE-A 198 15 879.3 beschrieben sind, verwendet werden.

Der diesbezügliche Inhalt dieser Anmeldung wird ebenfalls durch Bezugnahme in den Kontext der vorliegenden Anmeldung aufgenommen.

Ferner lassen sich erfindungsgemäß Titansilicalite mit RUT-Struktur verwenden, herstellbar durch ein Verfahren, das die Schritte (i) und (ii) umfaßt:
(i) Herstellen einer Mischung aus mindestens einer SiO₂-Quelle und mindestens einer Titan-Quelle;
(ii) Kristallisation der Mischung aus (i) in einem Druckbehälter unter Zugabe mindestens einer Schablonenverbindung, wobei eine Suspension erhalten wird, dadurch gekennzeichnet, daß als Schablonenverbindung Amine oder Ammoniumsalze eingesetzt werden, die zur Stabilisierung von Käfigen der Silicatstruktur [4⁴5⁴6²] und [4⁴5⁶6⁵8¹] geeignet sind.

Details bezüglich dieser Katalysatoren lassen sich der DE-A 198 39 792.5 entnehmen.

Darüber hinaus lassen sich erfindungsgemäß die in der DE-A 198 47 630.2 beschriebenen Siliciumdioxide mit Meso- und Mikroporen verwenden, die vorzugsweise ein oder mehrere der folgenden Merkmale (i) bis (iii) aufweisen:
(i) Eine Summe der spezifischen Oberflächen der Meso- und Mikroporen von mindestens 200 m²/g;
(ii) eine Summe der Porenvolumen der Meso- und Mikroporen von mindestens 0,2 ml/g;
(iii) ein Maximum der Porendurchmesserverteilung der Mesoporen bei mindestens 3 nm.

Weitere Details bezüglich dieser Katalysatoren lassen sich der oben erwähnten Anmeldung entnehmen, deren diesbezüglicher Kontext vollumfänglich durch Bezugnahme in die vorliegende Anmeldung aufgenommen wird.

Wie eingangs erwähnt, können die nach dem erfindungsgemäßen Verfahren hergestellten Zeolith-haltigen kristallinen Feststoffe in üblicher Weise als Katalysatoren, Trägermaterialien für Katalysatoren, Sorptionsmittel, als Pigment oder als Füllstoff für Kunststoffe eingesetzt werden, wobei insbesondere die Verwendung zur Herstellung von Alkylenoxiden ausgehend von Alkenen unter Verwendung eines Hydroperoxids, insbesondere zur Herstellung von Propylenoxid durch Umsetzung von Propen mit H₂O₂, zu nennen ist.

Die vorliegende Erfindung soll nunmehr anhand eines Beispiels erläutert werden.

### BEISPIEL

In einem rührbaren Stahldruckbehälter wurden 11,98 kg Tetraethoxysilan, 240 g Tetraethylorthotitanat und eine Mischung aus 7,06 kg Tetrapropylammoniumhydroxid (40 Gew.-% in Wasser) in 10,54 kg deionisiertem Wasser gemischt und eine Stunde bei Raumtemperatur homogenisiert. Der dabei gebildete Alkohol wurde abdestilliert, der Rückstand mit 18,1 kg Wasser aufgefüllt und innerhalb von 24 Stunden bei 175 °C unter Rühren kristallisiert.

Das Kristallisationsprodukt wurde ohne weitere Trenn- oder Reinigungsschritte über eine Rohrleitung in einen Sprühtrockner (Fa. Niro) überführt und in einem Mengenstrom von 3 1/h über eine Düse versprüht. Die Eingangstemperatur betrug 230 °C bei einer Austrittstemperatur von 110 bis 120 °C. Als Trägergas wurde Stickstoff mit 2 Vol.-% Sauerstoff eingesetzt. Die Trocknungsgasmenge betrug 70 Nm³/h, wobei das Trocknungsgas mit dem Abgas auf 110 °C vorgeheizt wurde.

Auf eingesetztes SiO₂ bezogen, lag die Ausbeute an SiO₂ im Titanzeolith über die integrierten Schritte der Kristallisation und Sprühtrocknung bei 94 %.

## Patentansprüche

1. Verfahren zur Herstellung eines kristallinen Feststoffes, umfassend mindestens ein zeolithisches Material, bei dem der Feststoff aus mindestens einer Vorläuferverbindung kristallisiert wird und der Reaktionsaustrag der Kristallisation direkt einer Trocknung zugeführt wird, wobei die Trocknung in einer Atmosphäre, umfassend Sauerstoff und mindestens ein Inertgas, durchgeführt wird, wobei der Sauerstoffgehalt der Atmosphäre weniger als 10 Vol.-% beträgt.

2. Verfahren nach Anspruch 1, **dadurch gekennzeichnet, dass** die Trocknung eine Sprühtrocknung ist.

3. Verfahren nach Anspruch 1 oder 2, **dadurch gekennzeichnet, dass** die Kristallisation in Anwesenheit mindestens einer Templatverbindung durchgeführt wird.

4. Verfahren nach Anspruch 3, **dadurch gekennzeichnet, dass** nach Kontakt der Atmosphäre in Form eines Trägergasstroms mit dem zu trocknenden Reaktionsaustrag sich im Strom befindliche kondensierbare Templatverbindungen auskondensiert werden.

5. Verfahren nach Anspruch 3 oder 4, **dadurch gekennzeichnet, dass** Templatverbindungen, die vom getrockneten kristallinen Feststoff umfasst werden, mittels mindestens eines Waschprozesses von dem Feststoff abgetrennt werden.

6. Verfahren nach einem der Ansprüche 3 bis 5, **dadurch gekennzeichnet, dass** die Trocknung unter Einhaltung einer Temperatur von 100 bis 350 °C, vorzugsweise 100 bis 250 °C, und unter Erhalt eines freifließenden Pulvers durchgeführt wird.

7. Verfahren nach Anspruch 6, wobei die Trocknung unter Einhaltung der verfahrenstechnisch gebotenen Sicherheitsbedingungen durchgeführt wird.

8. Verfahren nach Anspruch 6 oder 7, wobei die Trocknung mittels einer Sprühtrocknung oder einer Wirbelschicht-Sprühgranulationstrocknung erfolgt.

9. Verfahren nach einem der Ansprüche 1 bis 8, wobei der Sauerstoffgehalt der Atmosphäre weniger als 5 Vol.-% beträgt.

10. Verfahren nach einem der Ansprüche 1 bis 9, wobei der Sauerstoffgehalt der Atmosphäre so eingestellt wird, dass sicher außerhalb der Explosionsgrenzen gearbeitet wird.

11. Verfahren nach einem der Ansprüche 1 bis 10, wobei das mindestens eine zeolithische Material ein Ti-, Ge-, Te-, Ta-, V-, Cr-, Nb- oder Zr-Zeolith des Strukturtyps ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON sowie ITQ-4 oder einer Mischstruktur aus zwei oder mehr dieser Strukturen oder ein Gemisch aus zwei oder mehr dieser Zeolithe ist.

12. Verfahren nach Anspruch 11, wobei das zeolithische Material mindestens ein Element, ausgewählt aus der Gruppe bestehend aus Aluminium, Titan, Bor, Eisen, Gallium, Vanadium, Zirkon, Zink, Zinn, Tellur, Germanium, SeltenerdMetallen und einem Gemisch aus zwei oder mehr davon, und/oder mindestens ein Element, ausgewählt aus der Gruppe bestehend aus Natrium, Kalium, Magnesium, Calcium, Metallen der Gruppen Ib, IIb, VIIIa, und einem Gemisch aus zwei oder mehr davon, umfasst.

13. Verfahren nach Anspruch 11 oder 12, wobei das zeolithische Material ein Zeolith, bevorzugt ein Titanzeolith mit MFI-Struktur, BEA-Struktur, MEL-Struktur, ITQ-4-Struktur oder MFI/MEL-Mischstruktur ist.

14. Verfahren nach einem der Ansprüche 1 bis 13, wobei das zeolithische Material ein Ti-Zeolith des Strukturtyps MFI ist.

15. Integriertes Verfahren zur Herstellung eines kristallinen Feststoffes, umfassend mindestens ein zeolithisches Material, in dem
(i) der Feststoff aus mindestens einer Vorläuferverbindung in Anwesenheit mindestens einer Templatverbindung kontinuierlich kristallisiert wird,
(ii) der Reaktionsaustrag aus der Kristallisation kontinuierlich sprühgetrocknet wird, wobei vor der Trocknung kein Bestandteil des Reaktionsaustrages der Kristallisation abgetrennt wird,
(iii) die Trocknung in einer Atmosphäre, umfassend Sauerstoff, (weniger als 10 Vol.-% Sauerstoff), und mindestens ein Inertgas, durchgeführt wird, wobei diese Atmosphäre als Trägergasstrom in Kreisfahrweise geführt wird,
(iv) aus dem Trägergasstrom nach Kontakt des Stromes mit dem zu trocknenden Reaktionsaustrag kondensierbare Templatverbindungen auskondensiert werden und in (i) rückgeführt werden,
(v) der sprühgetrocknete kristalline Feststoff aus (ii) einem kontinuierlichem Waschprozess unterworfen wird, in dem Templatverbindungen, die von dem kristallinen Feststoff umfasst werden, abgetrennt und in (i) rückgeführt werden, und
(vi) der aus (v) erhaltene kristalline Feststoff calciniert wird, wobei die dabei durch Abbrand der restlichen Menge an Templatverbindungen frei werdende Energie in (i) rückgeführt wird.

16. Verfahren nach Anspruch 15, wobei der Sauerstoffgehalt der Atmosphäre weniger als 5 Vol.-% beträgt.

17. Verfahren nach Anspruch 15 oder 16, wobei das zeolithische Material ein Ti-Zeolith des Strukturtyps MFI ist.

## Claims

1. A process for the preparation of a crystalline solid comprising at least one zeolitic material, in which the solid is crystallized from at least one precursor compound and the reaction discharge of the crystallization is fed directly to a drying stage, the drying being carried out in an atmosphere comprising oxygen and at least one inert gas, the oxygen content of the atmosphere being less than 10% by volume.

2. The process according to claim 1, **characterized in that** the drying is spray-drying.

3. The process according to claim 1 or 2, **characterized in that** the crystallization is carried out in the presence of at least one template compound.

4. The process according to claim 3, **characterized in that**, after contact of the atmosphere in the form of a carrier gas stream with the reaction discharge to be dried, condensable template compounds present in the stream are condensed out.

5. The process according to claim 3 or 4, **characterized in that** template compounds which are included in the dried crystalline solid are separated from the solid by means of at least one wash process.

6. The process according to any of claims 3 to 5, **characterized in that** the drying is carried out while maintaining a temperature of from 100 to 350°C, preferably from 100 to 250°C, so that a free-flowing powder is obtained.

7. The process according to claim 6, where the drying is carried out while maintaining the safety conditions necessary in the process.

8. The process according to claim 6 to 7, where the drying is effected by means of spray-drying or drying by means of fluidized-bed spray granulation.

9. The process according to any of claims 1 to 8, where the oxygen content of the atmosphere is less than 5% by volume.

10. The process according to any of claims 1 to 9, where the oxygen content of the atmosphere is adjusted so that the procedure is carried out safely outside the explosion limits.

11. The process according to any of claims 1 to 10, where the at least one zeolitic material is a Ti, Ge, Te, Ta, V, Cr, Nb or Zr zeolite of the structure type ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, EPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON and ITQ-4 or a mixture of two or more of these structures or a mixture of two or more of these zeolites.

12. The process according to claim 11, the zeolitic material comprising at least one element selected from the group consisting of aluminum, titanium, boron, iron, gallium, vanadium, zirconium, zinc, tin, tellurium, germanium, rare earth metals and a mixture of two or more thereof, and/or at least one element selected from the group consisting of sodium, potassium, magnesium, calcium, metals of groups Ib, IIb and VIIIa and a mixture of two or more thereof.

13. The process according to claim 11 or 12, where the zeolitic material is a zeolite, preferably a titanium zeolite having the MFI structure, BEA structure, MEL structure, ITQ-4 structure or MFI/MEL mixed structure.

14. The process according to any of claims 1 to 13, where the zeolitic material is a Ti zeolite of the structure type MFI.

15. An integrated process for the preparation of a crystalline solid comprising at least one zeolitic material, in which
(i) the solid is continuously crystallized from at least one precursor compound in the presence of at least one template compound,
(ii) the reaction discharge from the crystallization is continuously spray-dried, no component of the reaction discharge of the crystallization being separated off before the drying,
(iii) the drying is carried out in an atmosphere comprising oxygen (less than 10% by volume of oxygen) and at least one inert gas, this atmosphere being circulated as a carrier gas stream,
(iv) template compounds condensable from the carrier gas stream after contact of the stream with the reaction discharge to be dried are condensed out and are recycled to (i),
(v) the spray-dried crystalline solid from (ii) is subjected to a continuous wash process in which template compounds which are included in the crystalline solid are separated off and recycled to (i), and
(vi) the crystalline solid obtained from (v) is calcined, the energy released as a result of burning of the remaining amount of template compounds being fed back to (i).

16. The process according to claim 15, where the oxygen content of the atmosphere is less than 5% by volume.

17. The process according to claim 15 or 16, where the zeolitic material is a Ti zeolite of the structure type MFI.

## Revendications

1. Procédé de fabrication d'un solide cristallin comprenant au moins un matériau zéolithique, selon lequel le solide est cristallise à partir d'au moins un composé précurseur et la sortie de réaction de la cristallisation est introduite directement dans un séchage, le séchage étant réalisé dans une atmosphère qui comprend de l'oxygène et au moins un gaz inerte, la teneur en oxygène de l'atmosphère étant inférieure à 10 % en volume.

2. Procédé selon la revendication 1, **caractérisé en ce que** le séchage est un séchage par pulvérisation.

3. Procédé selon la revendication 1 ou 2, **caractérisé en ce que** à cristallisation est réalisée en présence d'au moins un composé de matrice.

4. Procédé selon la revendication 3, **caractérisé en ce qu'**après le contact de l'atmosphère sous la forme d'un courant de gaz vecteur avec la sortie de réaction à sécher, les composés de matrice condensables se trouvant dans le courant sont condensés.

5. Procédé selon la revendication 3 ou 4, **caractérisé en ce que** les composés de matrice qui sont compris dans le solide cristallin séché sont séparés du solide par au moins un procédé de lavage.

6. Procédé selon l'une quelconque des revendications 3 à 5, **caractérisé en ce que** le séchage est réalisé en maintenant une température de 100 à 350 °C, de préférence de 100 à 250 °C, et pour obtenir une poudre fluide.

7. Procédé selon la revendication 6, dans lequel le séchage est réalisé en maintenant les conditions de sécurité nécessaires pour le procédé.

8. Procédé selon à revendication 6 ou 7, dans lequel le séchage a lieu par séchage par pulvérisation ou séchage par granulation par pulvérisation en lit fluidisé.

9. Procédé selon l'une quelconque des revendications 1 à 8, dans lequel la teneur en oxygène de l'atmosphère est inférieure à 5 % en volume.

10. Procédé selon l'une quelconque des revendications 1 à 9, dans lequel la teneur en oxygène de l'atmosphère est ajustée de manière à travailler assurément en dehors des limites explosives.

11. Procédé selon l'une quelconque des revendications 1 à 10, dans lequel le ou les matériaux zéolithiques sont une zéolithe au Ti, Ge, Te, Ta, V, Cr, Nb ou Zr du type de structure ABW, ACO, AEI, AEL, AEN, AET, AFG, AFI, AFN, AFO, AFR, AFS, AFT, AFX, AFY, AHT, ANA, APC, APD, AST, ATN, ATO, ATS, ATT, ATV, AWO, AWW, BEA, BIK, BOG, BPH, BRE, CAN, CAS, CFI, CGF, CGS, CHA, CHI, CLO, CON, CZP, DAC, DDR, DFO, DFT, DOH, DON, EAB, EDI, EMT, SPI, ERI, ESV, EUO, FAU, FER, GIS, GME, GOO, HEU, IFR, ISV, ITE, JBW, KFI, LAU, LEV, LIO, LOS, LOV, LTA, LTL, LTN, MAZ, MEI, MEL, MEP, MER, MFI, MFS, MON, MOR, MSO, MTF, MTN, MTT, MTW, MWW, NAT, NES, NON, OFF, OSI, PAR, PAU, PHI, RHO, RON, RSN, RTE, RTH, RUT, SAO, SAT, SBE, SBS, SBT, SFF, SGT, SOD, STF, STI, STT, TER, THO, TON, TSC, VET, VFI, VNI, VSV, WEI, WEN, YUG, ZON et ITQ-4 ou d'une structure mixte de deux ou plus de ces structures ou un mélange de deux ou plus de ces zéolithes.

12. Procédé selon la revendication 11, dans lequel le matériau zéolithique comprend au moins un élément choisi dans le groupe constitué par l'aluminium, le titane, le bore, le fer, le gallium, le vanadium, le zirconium, le zinc, l'étain, le tellure, le germanium, les métaux de terres rares et un mélange de deux ou plus d'entre eux, et/ou au moins un élément choisi dans le groupe constitué par le sodium, le potassium, le magnésium, le calcium, les métaux des groupes Ib, IIb, VIIIa, et un mélange de deux ou plus d'entre eux.

13. Procédé selon la revendication 11 ou 12, dans lequel le matériau zéolithique est une zéolithe, de préférence une zéolithe au titane de structure MFI, de structure BEA, de structure MEL, de structure ITQ-4 ou de structure mixte MFI/MEL.

14. Procédé selon l'une quelconque des revendications 1 à 13, dans lequel le matériau zéolithique est une zéolithe au Ti du type de structure MFI.

15. Procédé intégré de fabrication d'un solide cristallin comprenant au moins un matériau zéolithique, selon lequel
(i) le solide est cristallisé en continu à partir d'au moins un composé précurseur en présence d'au moins un composé de matrice,
(ii) la sortie de réaction de la cristallisation est séchée par pulvérisation en continu, aucun constituant de la sortie de réaction de la cristallisation n'étant séparé avant le séchage,
(iii) le séchage est réalisé dans une atmosphère comprenant de l'oxygène (moins de 10 % en volume d'oxygène) et au moins un gaz inerte, cette atmosphère étant mise en circulation dans un circuit sous la forme d'un courant de gaz vecteur,
(iv) les composés de matrice condensables sont condensés à partir du courant de gaz vecteur après le contact du courant avec la sortie de réaction à sécher et recyclés dans (i),
(v) le solide cristallin séché par pulvérisation de (ii) est soumis à un procédé de lavage continu lors duquel les composés de matrice qui sont compris dans le solide cristallin sont séparés et recyclés dans (i), et (vi) le solide cristallin obtenu en (v) est calciné, l'énergie libérée par combustion de la quantité résiduelle de composés de matrice étant recyclée dans (i).

16. Procédé selon la revendication 15, dans lequel la teneur en oxygène de l'atmosphère est inférieure à 5 % en volume.

17. Procédé selon la revendication 15 ou 16, dans lequel le matériau zéolitique est une zéolithe au Ti du type de structure MFI.
